(19) **Europäisches Patentamt**
**European Patent Office**
**Office européen des brevets**

(11) **EP 3 171 200 B1**

(12) **EUROPEAN PATENT SPECIFICATION**

(45) Date of publication and mention
of the grant of the patent:
**23.06.2021 Bulletin 2021/25**

(51) Int Cl.:
**G01S 7/62** *(2006.01)*     **G01S 15/89** *(2006.01)*
**G01S 7/52** *(2006.01)*

(21) Application number: **16200368.5**

(22) Date of filing: **23.11.2016**

(54) **LOW-COST UNDERWATER ACOUSTIC SYSTEM FOR REAL-TIME THREE-DIMENSIONAL IMAGING**

KOSTENGÜNSTIGES UNTERWASSERAKUSTIKSYSTEM ZUR DREIDIMENSIONALEN ABBILDUNG IN ECHTZEIT

SYSTÈME ACOUSTIQUE SOUS-MARIN À FAIBLE COÛT POUR UNE IMAGERIE TRIDIMENSIONNELLE EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2015 IT UB20155821**

(43) Date of publication of application:
**24.05.2017 Bulletin 2017/21**

(73) Proprietor: **Leonardo S.p.a.**
**00195 Roma (IT)**

(72) Inventors:
- **FERRAIOLI, Fabrizio**
 **00195 ROMA (IT)**
- **MARASCO, Renato**
 **00195 ROMA (IT)**

(74) Representative: **Bongiovanni, Simone et al**
**Studio Torta S.p.A.**
**Via Viotti, 9**
**10121 Torino (IT)**

(56) References cited:
**EP-A1- 2 299 292**     **US-A- 3 784 805**
**US-A- 5 200 931**     **US-A- 5 797 845**
**US-A1- 2009 310 438**

- **KNUDSEN D C ED - INSTITUTE OF ELECTRICAL AND ELECTRONICS ENGINEERS: "A NEW DIGITAL BEAMFORMER FOR ACOUSTIC IMAGING", ACOUSTICS, ARCTIC STUDIES. SEATTLE, SEPT. 18 - 21, 1989; [PROCEEDINGS OF THE OCEANS CONFERENCE], NEW YORK, IEEE, US, vol. -, 18 September 1989 (1989-09-18), pages 1021-1026, XP000130437,**

**Description**

## TECHNICAL FIELD OF INVENTION

The present invention relates, in general, to an acoustic system for the imaging of underwater objects.

In particular, the present invention concerns a low-cost underwater acoustic system for real-time three-dimensional (3D) imaging applications.

The present invention find advantageous, but not exclusive, application in those operating scenarios where the use of underwater optical systems is severely limited or even impossible (for example, due to scarce visibility under water).

## STATE OF THE ART

As is known, in some technical applications it is necessary to examine underwater objects in high resolution (for example, for recovering archaeological finds or submerged wrecks, or for salvaging sunken sea/submarine/amphibious craft). Unfortunately, however, the known types of underwater acoustic imaging systems are not capable of providing high-resolution 3D images in real time and at a short distance.

In this respect, EP 2 299 292 A1 discloses a scanning apparatus comprising a sonar head, the sonar head comprising an array of transmitting elements and an array of receiving elements, said receiving array being mounted at a position orthogonal to the transmitting array, wherein the elements of the arrays have a substantially hemi-spherical form.

Moreover, US 5 200 931 A discloses a method and apparatus for the generation of a three-dimensional image representing structures detected within a volume. In particular, according to US 5 200 931 A, two dimensional differential phase measurements are made on backscatter signals; azimuth, elevation and range are calculated over a statistically large number of spatially diverse backscatter returns and used to construct a histogram of backscatter data; the histogram of backscatter data can be processed with standard image processing techniques to produce terrain maps or volumetric models of the volume of water. A system constructed according to the methods of US 5 200 931 A is capable of producing a three-dimensional map of the volume insonified without mechanical array scanning or electronic beam scanning. A combination of two or more volumetric scanning systems can be used to increase the resolution achievable in modelling the volumetric area.

## OBJECT AND SUMMARY OF THE INVENTION

Therefore, one object of the present invention is to provide an underwater acoustic imaging system capable of:

- in general, at least partially overcoming the technical drawbacks of known types of underwater acoustic imaging systems; and,
- in particular, providing high-resolution 3D images of underwater objects, expediently in real time and at a short distance.

This and other objects are achieved by the present invention in so far as it relates to an acoustic system for underwater object imaging, as defined in the appended claims.

In particular, the acoustic system according to the present invention comprises an underwater transceiver antenna of electro-acoustic type, and control and processing means configured to carry out a detection step and an imaging step.

The detection step includes:

- operating the underwater transceiver antenna to transmit isotropic acoustic pulses and to receive corresponding echo signals;
- computing average powers of samples of said echo signals by using a sliding window of integration of squared amplitudes of the samples of said echo signals;
- weighting the computed average powers by an exponential function of compensation for spherical divergence attenuation; and
- detecting an underwater object on the basis of the weighted average powers and of a detection threshold.

The imaging step includes transmitting, by means of the underwater transceiver antenna and for each azimuth angle included in a predetermined range of azimuth angles, a corresponding acoustic pulse by:

- using a fan beam pointed at said azimuth angle and having a predetermined width in azimuth and a predetermined width in elevation, wherein said predetermined width in elevation is greater than said predetermined width in azimuth;

and

- feeding the underwater transceiver antenna with excitation signals such as to cause a coherent recombination of corresponding acoustic signals transmitted in water at a three-dimensional focusing region located at a predetermined focusing distance from the underwater transceiver antenna, at which predetermined focusing distance an underwater object is located; wherein the acoustic pulses are transmitted by varying azimuth pointing of the fan beam so as to perform a complete scan of the predetermined range of azimuth angles.

The imaging step further includes:

- for each acoustic pulse transmitted, receiving a corresponding echo signal by means of the underwater transceiver antenna;
- processing the received echo signals by performing a beamforming method so as to compute a three-dimensional digital map of powers associated with a predetermined grid of points located in the three-dimensional focusing region; wherein the received echo signals are processed by forming pencil beams, each of which is pointed at a corresponding point of said predetermined grid; and
- processing the three-dimensional digital map of powers by performing an edge detection method so as to form an image of the underwater object.

The acoustic system is characterized in that the processing means are configured to:

- compute a distance, from the underwater transceiver antenna, of an underwater object detected in the detection step; and
- carry out the imaging step by using said computed distance as the predetermined focusing distance.

## BRIEF DESCRIPTION OF THE DRAWINGS

For a better understanding of the present invention, some preferred embodiments, provided by way of non-limitative example, will now be described with reference to the accompanying drawings (not to scale), in which:

- Figure 1 schematically shows an acoustic system for the imaging of underwater objects according to a preferred embodiment of the present invention;
- Figure 2 schematically shows an example of an operational scenario of the system in Figure 1;
- Figure 3 shows a preferred embodiment of a underwater antenna unit of the system in Figure 1, wherein said underwater antenna unit is made according to the principles of a first aspect of the present invention;
- Figure 4 schematically shows a preferred embodiment of a method for imaging underwater objects according to a second aspect of the present invention;
- Figure 5 shows an example of the echo signal received during a detection step of the method in Figure 4;
- Figure 6 shows an example of average power samples computed during said detection step of the method in Figure 4, and also an example of an exponential weighting function used during said detection step;
- Figure 7 shows an example of weighted samples computed during said detection step;
- Figure 8 shows examples of transmission of a fan beam and the formation, in reception, of a pencil beam during an imaging step of the method in Figure 4; and
- Figure 9 shows an example of an image created by carrying out said imaging step.

## DETAILED DESCRIPTION OF PREFERRED EMBODIMENTS OF THE INVENTION

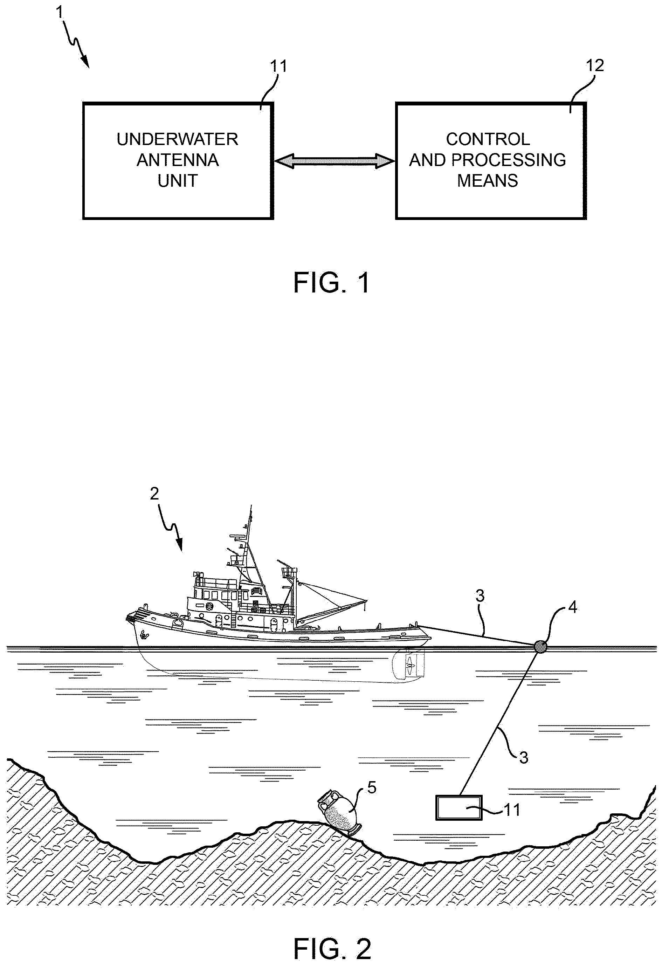

In Figure 1, reference numeral 1 indicates, as a whole, an underwater acoustic imaging system according to a preferred embodiment of the present invention.

In particular, as schematically shown in Figure 1, the system 1 includes:

- an underwater antenna unit 11 according to a first aspect of the present invention; and
- control and processing means 12 configured to control the transmission and reception operation of said underwater antenna unit 11 and to process the received signals through the implementation of a method for imaging underwater objects according to a second aspect of the present invention.

The system 1 can be advantageously employed in search, location, identification and salvage applications of underwater objects (such as, for example, archaeological finds or submerged wrecks, sunken sea/submarine/amphibious craft, etc.).

With regard to this, Figure 2 schematically shows an example of an operational scenario of the system 1, in which a ship 2, connected to the underwater antenna unit 11 by one or more cables 3 passing through a buoy 4, is used.

Preferably, the control and processing means 12 are implemented using a distributed architecture. In particular, said control and processing means 12 may expediently include:

- excitation means (not shown), which are coupled to the underwater antenna unit 11 to operate it in transmission;
- acquisition means (not shown), which are coupled to the underwater antenna unit 11 to acquire the signals received by the latter and to carry out preliminary processing on the received signals (for example amplification, filtering, analogue-digital conversion, etc.); and
- a central control and processing unit (not shown), which can, for example, be installed on the ship 2 and be connected to said excitation and acquisition means via said cable(s) 3 and which is programmed (for example, by means of one or more opportune portions of software code) to control the operation of the entire system 1 and to process the received signals (downstream of the pre-processing performed by the acquisition means) in order to form 3D images of underwater objects.

In particular, in the example in Figure 2, the system 1 is used for to search for, locate, identify and salvage a submerged archaeological find 5.

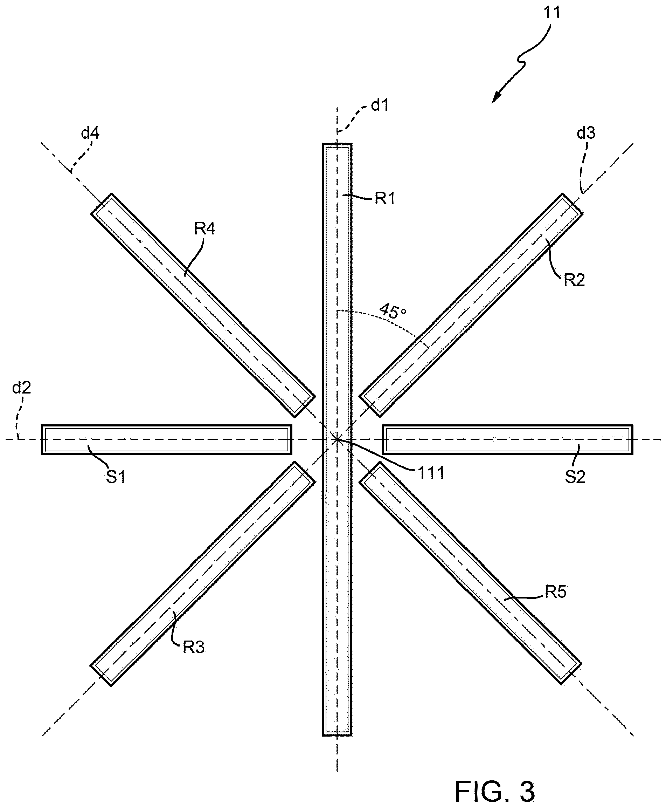

Figure 3 shows a preferred embodiment of the underwater antenna unit 11 according to the first aspect of the present invention.

In particular, as shown in Figure 3, the underwater antenna unit 11 comprises:

- a transmitting antenna, which includes two arrays of active electro-acoustic transducers S1 and S2, that lie on a same plane PI, and
- a receiving antenna, which includes five arrays of passive electro-acoustic transducers R1, R2, R3, R4 and R5 that lie on said plane P1;

in which:

- a first array of passive electro-acoustic transducers R1 extends mainly along a first rectilinear direction d1 that lies on said plane P1 and identifies an elevation direction;
- the two arrays of active electro-acoustic transducers S1 and S2 extend mainly along a second rectilinear direction d2 that lies on said plane PI, is perpendicular to the first rectilinear direction d1 and intersects said first rectilinear direction d1 at a point 111 identifying a phase centre of the underwater antenna unit 11;
- the second rectilinear direction d2 identifies an azimuth direction;
- the two arrays of active electro-acoustic transducers S1 and S2 extend along the second rectilinear direction d2, each on a respective side with respect to the phase centre 111;
- the first array of passive electro-acoustic transducers R1 extend through the phase centre 111 and on both sides with respect to said phase centre 111 along the first rectilinear direction d1;
- a second and a third array of passive electro-acoustic transducers R2 and R3 extend mainly along a third rectilinear direction d3 that lies on said plane PI, passes through the phase centre 111 and is inclined by 45° with respect to both the first rectilinear direction d1 and the second rectilinear direction d2;
- the second and third arrays of passive electro-acoustic transducers R2 and R3 extend along the third rectilinear direction d3, each on a respective side with respect to the phase centre 111;
- a fourth and a fifth array of passive electro-acoustic transducers R4 and R5 mainly extend along a fourth rectilinear direction d4 that lies on said plane PI, passes through the phase centre 111 and is inclined by 45° with respect to both the first rectilinear direction d1 and the second rectilinear direction d2 and by 90° with respect to the third rectilinear direction d3; and
- the fourth and fifth arrays of passive electro-acoustic transducers R4 and R5 extend along the fourth rectilinear direction d4, each on a respective side with respect to the phase centre 111.

Preferably, the respective active electro-acoustic transducers of each of the two arrays S1 and S2 are spaced apart from one another according to a first spacing law, while the respective passive electro-acoustic transducers of each of the five arrays R1, R2, R3, R4 and R5 are spaced apart from one another according to a second spacing law, which may coincide with, or be different from, said first spacing law.

Conveniently, the first spacing law envisages that, in each of the two transmitting arrays S1 and S2, the spacing between the barycentres of adjacent active electro-acoustic transducers increases with increasing distance from the phase centre 111 according to a first nonlinear law, preferably a first logarithmic law.

Conveniently, the second spacing law similarly envisages that, in each of the five receiving arrays R1, R2, R3, R4 and R5, the spacing between the barycentres of adjacent passive electro-acoustic transducers increases with increasing distance from the phase centre 111 according to a second nonlinear law, preferably a second logarithmic law.

Preferably, the active and passive electro-acoustic transducers (for example, of the piezoelectric type) operate in the range 650-750 kHz.

Conveniently, the arrays S1, S2, R1, R2, R3, R4 and R5 are housed/placed/fastened on a base structure designed to dampen vibrations.

The underwater antenna unit 11 also conveniently comprises covering means made of an acoustically transparent material, arranged to protect the arrays S1, S2, R1, R2, R3, R4 and R5.

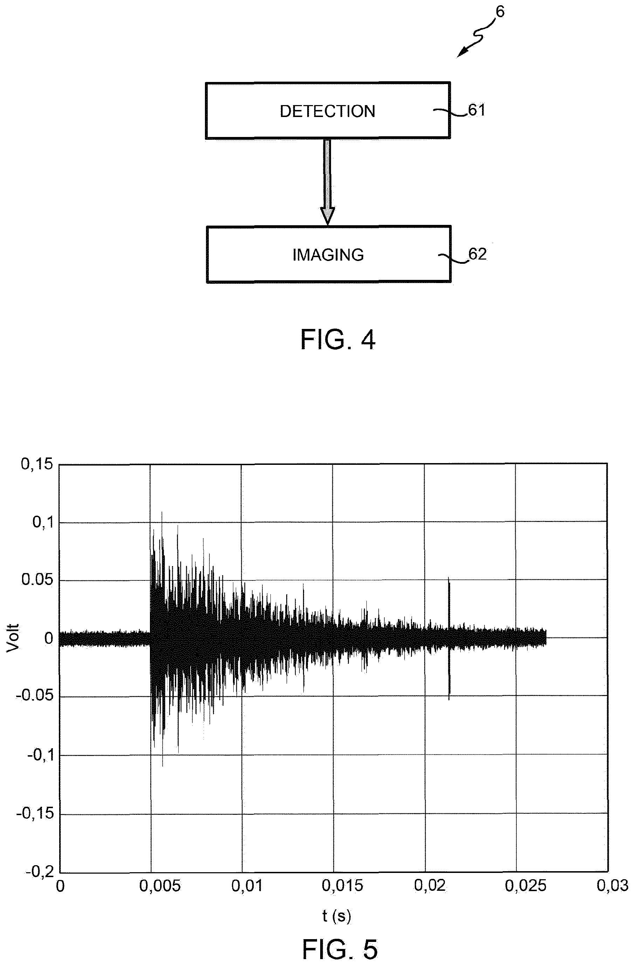

Figure 4 schematically shows a preferred embodiment of the imaging method (indicated as a whole by reference numeral 6) implemented, in use, by the control and processing means 12, i.e. of the method for imaging underwater objects according to the second aspect of the present invention.

In particular, the method 6 includes:

- a detection step (block 61) for detecting the presence of underwater objects and, for each detected object, a respective in-range distance of said object from the underwater antenna unit 11; and
- an imaging step (block 62) for reconstructing an image of the detected object, in particular an image of the silhouette of said detected object.

In particular, the detection step (block 61) comprises:

- transmitting isotropic acoustic pulses, i.e. unfocused ones, by activating, in transmission, the active electro-acoustic transducers arranged in a central area of the underwater antenna unit 11; and,
- for each isotropic acoustic pulse transmitted,

    - receiving a corresponding echo signal by activating, in reception, the passive electro-acoustic transducers arranged in a central area of the underwater antenna unit 11,
    - computing average powers of samples of said echo signal by using a sliding window of integration of squared amplitudes of the samples of said echo signal,
    - weighting the computed average powers by an exponential function of compensation for spherical divergence attenuation,
    - detecting one or more underwater objects on the basis of

        - the weighted average powers, and
        - a detection threshold, which can be set manually by an operator (for example, via an opportune user interface coupled to the control and processing means 12), or which is preferably automatically computed by said control and processing means 12, and

    - determining, for each detected object, a respective distance of said object from the underwater antenna unit 11.

As already explained, only a few active electro-acoustic transducers are employed in the detection step (block 61), these being arranged in the central area of the underwater antenna unit 11 to transmit isotropic acoustic pulses, i.e. unfocused ones.

Conveniently, the active electro-acoustic transducers arranged in said central area of the underwater antenna unit 11 are fed with square-wave excitation signals in the detection step (block 61) .

Preferably, the duration of the pulses transmitted during the detection step (block 61) is greater than the duration of the pulses transmitted during the imaging step (block 62).

Conveniently, an opportune analogue-digital conversion is applied to the echo signals received during the detection step (block 61).

Preferably, the echo signals received during the detection step (block 61) are analysed with a filter estimating the average noise power. This average noise power can then be conveniently used for estimating the detection threshold in an adaptive manner.

An example of the echo signal received during the detection step (block 61) is shown in Figure 5, where it can be noted that reception is only enabled after a time corresponding to a predetermined blind distance and is interrupted, for simplicity, before the arrival of the echo from the bottom or from the surface of the sea.

As previously explained, the average powers of the samples of an echo signal received during the detection step (block 61) (for example, the signal shown in Figure 5) are computed using a sliding window of integration of squared amplitudes of the samples, thereby obtaining the following sequence of average power samples:

$$P(t_k) = e^{\beta(t_k - t_G)} \sum_{i=1}^{N_c} \left( x(t_{k-i}) \right)^2 \qquad t_k \geq t_G \, ,$$

where $t_G$ indicates the aforementioned time related to the predetermined blind distance.

Conveniently, the sliding window comprises a number $N_c$ of samples related to the duration of the transmitted pulse and is translated with 75% overlap.

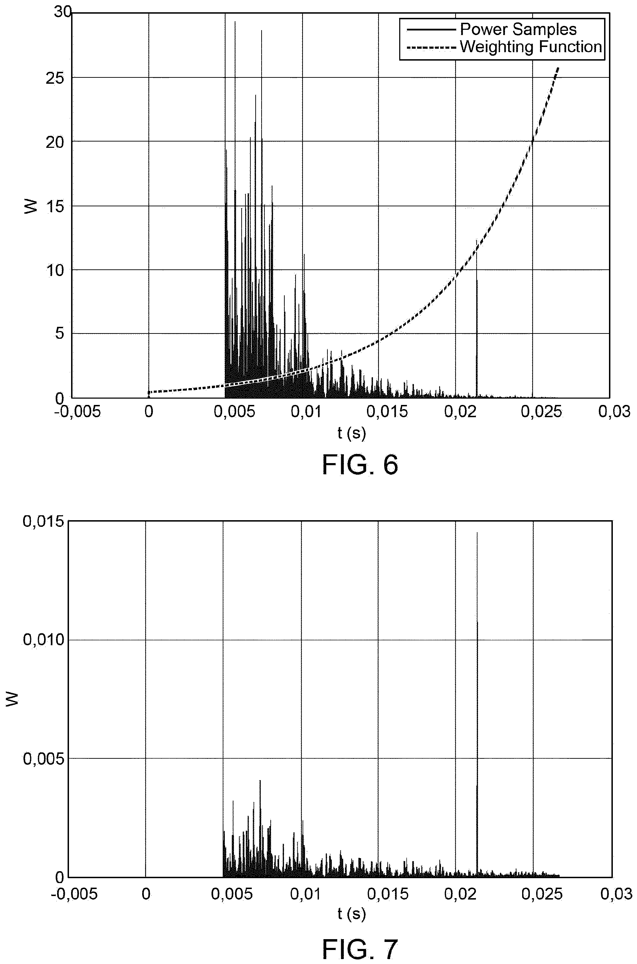

The average power samples are then weighted by means of an exponential function that takes into account the spherical divergence attenuation of the level of reverberation as function of distance and, therefore, of time. With regard to this, an example of average power samples, as well as an example of the exponential weighting function, are shown in Figure 6; in addition, the corresponding weighted samples are shown in Figure 7.

Once the weighted average power samples have been obtained, the detection step (block 61) can conveniently proceed in the following manner:

- the amplitudes and times associated with the first M samples of highest power, separated in time by more than Q times the duration of the pulse (for example, M=2 and Q=4) are stored;
- these samples and those adjacent within a range of $\pm B$ (for example, B=4) are ignored and the maximum value in the remaining samples is searched for;
- the two maximum power values are assigned to echoes originating from a target that exceed the mean value by 4 dB;
- if only one of the maximums passes the test, the corresponding time allows determining the distance; if both pass the test, the maximum with the smaller corresponding time is considered; instead, if neither of the two values pass the test, it is assumed that there are no targets for the transmitted pulse.

The distance can be conveniently determined in one of the following three ways:

a) processing the powers of the signals as described above in a completely automatic manner; or
b) leaving the decision of identifying the time of the echo of a possible target based on the received powers to an operator; or
c) providing distance information directly to an operator without anything regarding the received signal.

Instead, with regards to the imaging step (block 62), this comprises:

- transmitting, for each azimuth angle included in a predetermined range of azimuth angles, a corresponding acoustic pulse by

    - using a fan beam very narrow in azimuth (for example, with a width in azimuth of even less than 1°), wherein said fan beam is pointed at said azimuth angle and has a predetermined width in elevation much larger than the width in azimuth (for example, a predetermined width in elevation of 40°), and
    - feeding the active electro-acoustic transducers with square-wave excitation signals such as to cause a coherent recombination of corresponding acoustic signals transmitted in water at a three-dimensional focusing region located at a given focusing distance from the underwater antenna unit 11, at which given focusing distance an underwater object has been detected;

    wherein the acoustic pulses are transmitted by varying, for each new acoustic pulse to be transmitted, the azimuth pointing of the fan beam so as to perform a complete scan of the predetermined range of azimuth angles;
- for each acoustic pulse transmitted, receiving a corresponding echo signal by activating, in reception, the passive electro-acoustic transducers;
- processing the received echo signals by performing a beamforming method so as to compute a three-dimensional digital map of powers associated with a predetermined grid of points located in the three-dimensional focusing region; wherein the echo signals related to a same azimuth pointing are processed by forming pencil beams, each of which is pointed at a corresponding point of said predetermined grid; and
- processing the three-dimensional digital map of powers by performing an edge detection method (for example, double-threshold-based) so as to form an image of the contours of the detected object.

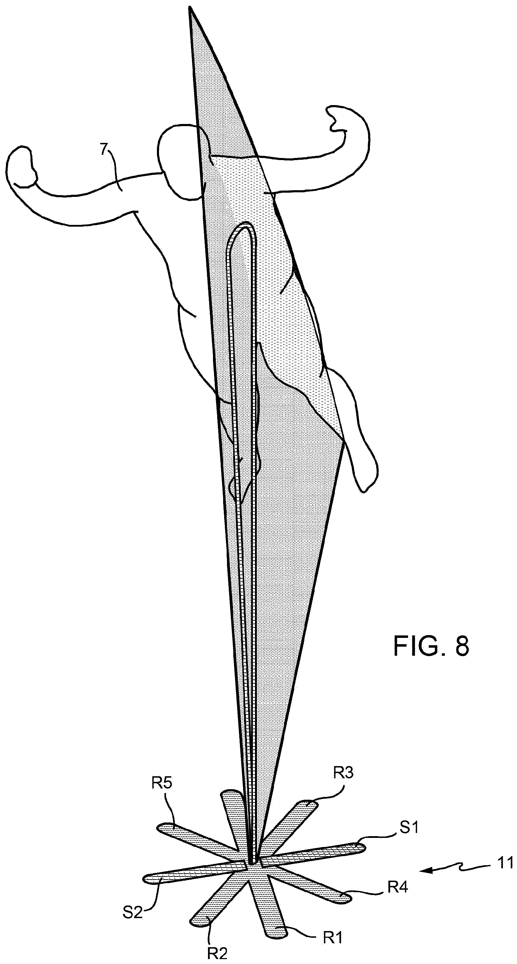

For a better understanding of the method for imaging underwater objects according to the second aspect of the present invention, Figure 8 shows:

- an example of transmission, by the underwater antenna unit 11 (in particular, during the azimuth scanning performed in the aforementioned imaging step - block 62), of a very narrow fan beam in azimuth that irradiates a corresponding portion (a kind of "slice") of a submerged statue 7; and also
- an example of the formation, based on the corresponding echo signal received by the underwater antenna unit 11, of a pencil beam pointed towards a point of said portion of the submerged statue 7.

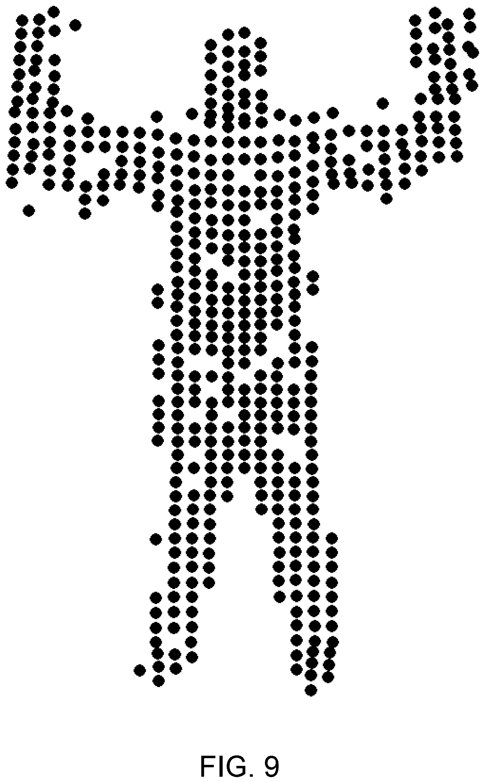

In addition, Figure 9 shows an example of an image of the submerged statue 7 formed by carrying out the aforementioned imaging step (block 62).

Unlike the detection step (block 61), where only a few active and passive electro-acoustic transducers arranged in the central area of the underwater antenna unit 11 are used, all of the active and passive electro-acoustic transducers of the underwater antenna unit 11 are used in the imaging step (block 62) .

Conveniently, during the imaging step (block 62), the transmitting arrays S1 and S2 transmit acoustic pulses of short duration (for example, a duration of 5 carrier cycles), in particular of shorter duration than the pulses transmitted during the detection step (block 61).

For each pulse transmitted during the imaging step (block 62), the listening time is related to a predetermined time window around the time corresponding to the focusing distance.

Conveniently, an opportune analogue-digital conversion is also applied to the echo signals received during the imaging step (block 62).

As previously explained, during the imaging step (block 62), the active electro-acoustic transducers are fed with square-wave excitation signals, opportunely delayed and with the first half period opportunely choked with respect to the predetermined grid of points located in the three-dimensional focusing region, so as to transmit harmonic fundamentals of opportune phase in water that coherently recombine at said three-dimensional focusing region, where, in consequence, a wave of amplitude $N_s$ times the amplitude of the fundamental is produced.

In particular, in transmission, the time delays between the pulses and the phases of the harmonic carriers are determined on the basis of the focusing distance and the azimuth pointing angle, while in reception, the delay index matrices to apply to the samples of the received echo signals are determined as a function of the distance and the azimuth and elevation angles.

It should also be noted that the use of square-wave excitation, since it implies the use of very simple and therefore very inexpensive excitation elements (such as electronic switches), is a cheaper solution with respect to the use of sinusoidal excitation, which, instead, entails the use of more sophisticated and consequently more expensive excitation elements.

Furthermore, the use of square-wave excitation also enables totally eliminating the power amplification stage normally employed in all known types of underwater acoustic imaging systems.

Moreover, it important to note that the use of square-wave excitation could also be advantageous in underwater acoustic systems of a non-imaging type, such as sonar-type systems for example.

Furthermore, it is important to stress that the geometry of the underwater antenna unit 11 enables significant savings in the number of operations necessary for the beamforming processing.

The combined use of both aspects of the present invention (i.e. the combined use of the underwater antenna unit according to the first aspect and the method for imaging underwater objects according to the second aspect) proves to be particularly advantageous, as previously described in detail.

In any case, it is most important to highlight the fact that each of the two distinctive aspects of the present invention can be advantageously implemented independently of the other.

In particular, the underwater antenna unit according to the first aspect of the present invention can be advantageously used, without requiring modifications, in combination with any technique/methodology for imaging underwater objects.

In the same way, the method for imaging underwater objects according to the second aspect of the present invention can also be advantageously used, without requiring modifications, in combination with any underwater transceiver antenna of an electro-acoustic type.

The numerous advantages of the present invention are immediately evident from the foregoing description.

In particular, it is important to underline the fact that the present invention ensures adequate performance and image resolutions in search, location, identification and salvage applications of underwater objects (such as, for example, archaeological finds or submerged wrecks, sunken sea/submarine/amphibious craft, etc.).

Moreover, unlike known types of underwater acoustic imaging systems, the underwater acoustic imaging system according to the present invention is a low-cost system capable of providing high-resolution 3D images of underwater objects, conveniently in real time and also at a short distance.

**Claims**

1. An acoustic system (1) for underwater object imaging, comprising an underwater transceiver antenna (11) of electro-acoustic type, and control and processing means (12) configured to carry out a detection step (block 61) and an imaging step (block 62);
   the detection step (block 61) including:

   • operating the underwater transceiver antenna (11) to transmit isotropic acoustic pulses and to receive corresponding echo signals;
   • computing average powers of samples of said echo signals by using a sliding window of integration of squared amplitudes of the samples of said echo signals;
   • weighting the computed average powers by an exponential function of compensation for spherical divergence attenuation; and
   • detecting an underwater object (5;7) on the basis of the weighted average powers and of a detection threshold;

   the imaging step (block 62) including transmitting, by means of the underwater transceiver antenna (11) and for each azimuth angle included in a predetermined range of azimuth angles, a corresponding acoustic pulse by:

   • using a fan beam pointed at said azimuth angle and having a predetermined width in azimuth and a predetermined width in elevation, wherein said predetermined width in elevation is greater than said predetermined width in azimuth; and
   • feeding the underwater transceiver antenna (11) with excitation signals such as to cause a coherent recombination of corresponding acoustic signals transmitted in water at a three-dimensional focusing region located at a predetermined focusing distance from the underwater transceiver antenna (11), at which predetermined focusing distance an underwater object (5;7) is located;

   wherein the acoustic pulses are transmitted by varying azimuth pointing of the fan beam so as to perform a complete scan of the predetermined range of azimuth angles;
   said imaging step (block 62) further including:

   • for each acoustic pulse transmitted, receiving a corresponding echo signal by means of the underwater transceiver antenna (11);
   • processing the received echo signals by performing a beamforming method so as to compute a three-dimensional digital map of powers associated with a predetermined grid of points located in the three-dimensional focusing region; wherein the received echo signals are processed by forming pencil beams, each of which is pointed at a corresponding point of said predetermined grid; and
   • processing the three-dimensional digital map of powers by performing an edge detection method so as to form an image of the underwater object (5;7);

   the acoustic system (1) being **characterized in that** the processing means (12) are configured to:

   • compute a distance, from the underwater transceiver antenna (11), of an underwater object (6) detected in the detection step (61); and
   • carry out the imaging step (block 62) by using said computed distance as the predetermined focusing distance.

2. The acoustic system of claim 1, wherein the control and processing means (12) are configured to carry out the imaging step (block 62) by feeding the underwater transceiver antenna (11) with square-wave excitation signals having predetermined delays such as to cause a coherent recombination of corresponding acoustic signals transmitted in water at the three-dimensional focusing region.

3. The acoustic system according to claim 1 or 2, wherein the control and processing means (12) are configured to carry out the detection step (block 61) by feeding the underwater transceiver antenna (11) with square-wave excitation signals.

4. The acoustic system according to any claim 1-3, wherein the underwater transceiver antenna (11) comprises active electro-acoustic transducers and passive electro-acoustic transducers; and wherein the control and processing means (12) are configured to carry out the detection step (block 61) by operating:

• in transmission, active electro-acoustic transducers arranged in a central region of said underwater transceiver antenna (11); and
• in reception, passive electro-acoustic transducers arranged in said central region of the underwater transceiver antenna (11).

5. The acoustic system according to any preceding claim, wherein the underwater transceiver antenna (11) comprises:

• a transmitting antenna that includes two arrays of active electro-acoustic transducers (S1,S2) lying on one and the same plane; and
• a receiving antenna that includes five arrays of passive electro-acoustic transducers (R1,R3,R3,R4,R5) lying on said plane;

wherein:

• a first array of passive electro-acoustic transducers (R1) mainly extends along a first rectilinear direction (d1) lying on said plane;
• the two arrays of active electro-acoustic transducers (S1,S2) mainly extend along a second rectilinear direction (d2) that lies on said plane, is perpendicular to the first rectilinear direction (d1) and intersects said first rectilinear direction (d1) at a point (111) identifying a phase centre of the underwater transceiver antenna (11);
• the two arrays of active electro-acoustic transducers (S1,S2) extend along the second rectilinear direction (d2), each on a respective side with respect to the phase centre (111);
• the first array of passive electro-acoustic transducers (R1) extends through the phase centre (111) and on both sides with respect to said phase centre (111) along the first rectilinear direction (d1);
• a second and a third array of passive electro-acoustic transducers (R2,R3) mainly extend along a third rectilinear direction (d3) that lies on said plane, passes through the phase centre (111) and is inclined by 45° with respect to both the first rectilinear direction (d1) and the second rectilinear direction (d2);
• the second and the third array of passive electro-acoustic transducers (R2,R3) extend along the third rectilinear direction (d3), each on a respective side with respect to the phase centre (111);
• a fourth and a fifth array of passive electro-acoustic transducers (R4,R5) mainly extend along a fourth rectilinear direction (d4) that lies on said plane, passes through the phase centre (111) and is inclined by 45° with respect to both the first rectilinear direction (d1) and the second rectilinear direction (d2) and by 90° with respect to the third rectilinear direction (d3); and
• the fourth and the fifth array of passive electro-acoustic transducers (R4,R5) extend along the fourth rectilinear direction (d4), each on a respective side with respect to the phase centre (111).

6. The acoustic system of claim 5, wherein each of the two arrays of active electro-acoustic transducers (S1,S2) includes respective active electro-acoustic transducers spaced apart from one another according to a first spacing law; and wherein each of the five arrays of passive electro-acoustic transducers (R1,R2,R3,R4,R5) includes respective passive electro-acoustic transducers spaced apart from one another according to a second spacing law.

7. The acoustic system of claim 6, wherein:

• in each of the two arrays of active electro-acoustic transducers (S1,S2), the spacing between the barycentres of adjacent active electro-acoustic transducers increases with increasing distance from the phase centre (111) according to a first nonlinear law; and
• in each of the five arrays of passive electro-acoustic transducers (R1,R2,R3,R4,R5), the spacing between the barycentres of adjacent passive electro-acoustic transducers increases with increasing distance from the phase centre (111) according to a second nonlinear law.

8. A computer program product comprising software code portions that are:

• executable by electronic processing means of an underwater acoustic system comprising an underwater transceiver antenna (11) of electro-acoustic type; and
• such as to cause, when executed, said electronic processing means to become configured as the control and processing means (12) of the acoustic system (1) as claimed in any preceding claim.

**Patentansprüche**

1.  Akustisches System (1) zur Abbildung von Unterwasserobjekten, das eine Unterwasser-Sende-/Empfangsantenne (11) vom elektroakustischen Typ und Steuer- und Verarbeitungsmittel (12) aufweist, die so konfiguriert sind, dass sie einen Erfassungsschritt (Block 61) und einen Abbildungsschritt (Block 62) ausführen;
    wobei der Erfassungsschritt (Block 61) Folgendes aufweist:

    - Betreiben der Unterwasser-Sende-/Empfangsantenne (11) zum Senden isotroper akustischer Impulse und zum Empfangen entsprechender Echosignale;
    - Berechnen von Durchschnittsleistungen von Abtastwerten der Echosignale unter Verwendung eines gleitenden Fensters der Integration der quadrierten Amplituden der Abtastwerte der Echosignale;
    - Gewichten der berechneten Durchschnittsleistungen durch eine Exponentialfunktion zur Kompensation der sphärischen Divergenzdämpfung; und
    - Erkennen eines Unterwasserobjekts (5; 7) auf der Basis der gewichteten Durchschnittsleistungen und eines Erkennungsschwellenwerts;
    wobei der Abbildungsschritt (Block 62) das Senden eines entsprechenden akustischen Impulses mittels der Unterwasser-Sende-/Empfangsantenne (11) und für jeden Azimutwinkel, der in einem vorbestimmten Bereich von Azimutwinkeln enthalten ist, durch Folgendes aufweist
    - Verwenden eines Fächerstrahls, der auf den Azimutwinkel gerichtet ist und eine vorbestimmte Breite im Azimut und eine vorbestimmte Breite in Elevation aufweist, wobei die vorbestimmte Breite in Elevation größer ist als die vorbestimmte Breite im Azimut; und
    - Versorgen der Unterwasser-Sende-/Empfangsantenne (11) mit Anregungssignalen, um eine kohärente Rekombination von entsprechenden akustischen Signalen zu bewirken, die im Wasser in einem dreidimensionalen Fokussierungsbereich übertragen werden, der sich in einem vorbestimmten Fokussierungsabstand von der Unterwasser-Sende-/Empfangsantenne (11) befindet, wobei sich in diesem vorbestimmten Fokussierungsabstand ein Unterwasserobjekt (5, 7) befindet;

    wobei die akustischen Impulse durch Variieren der Azimutausrichtung des Fächerstrahls übertragen werden, um einen vollständigen Scan des vorbestimmten Bereichs von Azimutwinkeln durchzuführen;
    wobei der Abbildungsschritt (Block 62) ferner Folgendes aufweist:

    - für jeden gesendeten akustischen Impuls das Empfangen eines entsprechenden Echosignals mittels der Unterwasser-Sende-/Empfangsantenne (11);
    - Verarbeiten der empfangenen Echosignale durch Ausführen eines Strahlformungsverfahrens, um eine dreidimensionale digitale Karte von Leistungen zu berechnen, die einem vorbestimmten Gitter von Punkten zugeordnet sind, die sich in dem dreidimensionalen Fokussierungsbereich befinden; wobei die empfangenen Echosignale durch Bilden von Pencil Beams bzw. Bleistiftstrahlen verarbeitet werden, von denen jeder auf einen entsprechenden Punkt des vorbestimmten Gitters gerichtet ist; und
    - Verarbeiten der dreidimensionalen digitalen Karte der Leistungen durch Ausführen eines Kantenerkennungsverfahrens, um ein Bild des Unterwasserobjekts (5; 7) zu bilden;

    wobei das akustische System (1) **dadurch gekennzeichnet ist, dass** die Verarbeitungsmittel (12) konfiguriert sind, um:

    - einen Abstand eines Unterwasserobjekts (6), das in dem Erfassungsschritt (61) erfasst wurde, von der Unterwasser-Sende-/Empfangsantenne (11) zu berechnen; und
    - den Abbildungsschritt (Block 62) unter Verwendung des berechneten Abstands als die vorbestimmte Fokussierungsdistanz auszuführen.

2.  Akustisches System nach Anspruch 1, wobei die Steuer- und Verarbeitungsmittel (12) so konfiguriert sind, dass sie den Abbildungsschritt (Block 62) ausführen, indem sie die Unterwasser-Sende-/Empfangsantenne (11) mit Rechteckwellen-Anregungssignalen speisen, die vorbestimmte Verzögerungen aufweisen, um eine kohärente Rekombination entsprechender akustischer Signale zu bewirken, die in dem dreidimensionalen Fokussierungsbereich im Wasser übertragen werden.

3.  Akustisches System nach Anspruch 1 oder 2, wobei die Steuer- und Verarbeitungsmittel (12) so konfiguriert sind, dass sie den Erfassungsschritt (Block 61) durch Speisung der Unterwasser-Sende-/Empfangsantenne (11) mit Rechteckwellen-Anregungssignalen durchführen.

**4.** Akustisches System nach einem der Ansprüche 1 bis 3, wobei die Unterwasser-Sende-/Empfangsantenne (11) aktive elektroakustische Wandler und passive elektroakustische Wandler aufweist; und wobei die Steuer- und Verarbeitungseinrichtung (12) so konfiguriert ist, dass sie den Erfassungsschritt (Block 61) ausführt durch Betreiben:

- aktiver elektroakustischer Wandler, die in einem zentralen Bereich der Unterwasser-Sende-/Empfangsantenne (11) angeordnet sind, beim Senden; und
- passiver elektroakustischer Wandler, die in dem zentralen Bereich der Unterwasser-Sende-/Empfangsantenne (11) angeordnet sind, beim Empfang.

**5.** Akustisches System nach einem der vorhergehenden Ansprüche, wobei die Unterwasser-Sende-/Empfangsantenne (11) Folgendes aufweist:

- eine Sendeantenne, die zwei Arrays aktiver elektroakustischer Wandler (S1, S2) enthält, die auf ein und derselben Ebene liegen; und
- eine Empfangsantenne, die fünf Arrays von passiven elektroakustischen Wandlern (R1, R3, R3, R4, R5) enthält, die auf der genannten Ebene liegen;

wobei:

- ein erstes Array von passiven elektroakustischen Wandlern (R1) sich hauptsächlich entlang einer ersten geradlinigen Richtung (d1) erstreckt, die auf der Ebene liegt;
- die zwei Arrays aktiver elektroakustischer Wandler (S1, S2) sich hauptsächlich entlang einer zweiten geradlinigen Richtung (d2) erstrecken, die auf der Ebene liegt, senkrecht zu der ersten geradlinigen Richtung (d1) ist und die erste geradlinige Richtung (d1) in einem Punkt (111) schneidet, der ein Phasenzentrum der Unterwasser-Sende-/Empfangsantenne (11) identifiziert;
- die beiden Arrays aktiver elektroakustischer Wandler (S1, S2) sich entlang der zweiten geradlinigen Richtung (d2) erstrecken, jeder auf einer jeweiligen Seite in Bezug auf das Phasenzentrum (111);
- die erste Anordnung von passiven elektroakustischen Wandlern (R1) sich durch das Phasenzentrum (111) und auf beiden Seiten in Bezug auf das Phasenzentrum (111) entlang der ersten geradlinigen Richtung (d1) erstreckt;
- ein zweites und ein drittes Array von passiven elektroakustischen Wandlern (R2, R3) sich hauptsächlich entlang einer dritten geradlinigen Richtung (d3) erstrecken, die auf der Ebene liegt, durch das Phasenzentrum (111) verläuft und sowohl bezüglich der ersten geradlinigen Richtung (d1) als auch bezüglich der zweiten geradlinigen Richtung (d2) um 45° geneigt ist;
- die zweite und die dritte Anordnung von passiven elektroakustischen Wandlern (R2, R3) sich entlang der dritten geradlinigen Richtung (d3) erstrecken, jeweils auf einer entsprechenden Seite in Bezug auf das Phasenzentrum (111);
- eine vierte und eine fünfte Anordnung von passiven elektroakustischen Wandlern (R4, R5) sich hauptsächlich entlang einer vierten geradlinigen Richtung (d4) erstrecken, die auf der Ebene liegt, durch das Phasenzentrum (111) verläuft und sowohl bezüglich der ersten geradlinigen Richtung (d1) als auch der zweiten geradlinigen Richtung (d2) um 45° und bezüglich der dritten geradlinigen Richtung (d3) um 90° geneigt ist; und
- die vierte und die fünfte Anordnung von passiven elektroakustischen Wandlern (R4, R5) sich entlang der vierten geradlinigen Richtung (d4) erstrecken, jeweils auf einer entsprechenden Seite in Bezug auf das Phasenzentrum (111).

**6.** Akustisches System nach Anspruch 5, wobei jedes der beiden Arrays aktiver elektroakustischer Wandler (S1, S2) entsprechende aktive elektroakustische Wandler enthält, die gemäß einem ersten Abstandsgesetz voneinander beabstandet sind; und wobei jedes der fünf Arrays passiver elektroakustischer Wandler (R1, R2, R3, R4, R5) entsprechende passive elektroakustische Wandler enthält, die gemäß einem zweiten Abstandsgesetz voneinander beabstandet sind.

**7.** Akustisches System nach Anspruch 6, wobei:

- in jedem der beiden Arrays aktiver elektroakustischer Wandler (S1, S2) der Abstand zwischen den elektroakustischen Baryzentren benachbarter aktiver elektroakustischer Wandler mit zunehmendem Abstand vom Phasenzentrum (111) gemäß einem ersten nichtlinearen Gesetz zunimmt; und
- in jeder der fünf Anordnungen von passiven elektroakustischen Wandlern (R1, R2, R3, R4, R5) der Abstand zwischen den Baryzentren von benachbarten passiven elektroakustischen Wandlern mit zunehmendem Abstand von dem Phasenzentrum (111) gemäß einem zweiten nichtlinearen Gesetz zunimmt.

8. Ein Computerprogrammprodukt, das Softwarecodeabschnitte aufweist, die:

- ausführbar sind durch elektronische Verarbeitungsmittel eines Unterwasserakustiksystems, das eine Unterwasser-Sende-/Empfangsantenne (11) vom elektroakustischen Typ aufweist; und
- derart vorgesehen sind, dass sie, wenn sie ausgeführt werden, bewirken, dass die elektronischen Verarbeitungsmittel als die Steuer- und Verarbeitungsmittel (12) des akustischen Systems (1) nach einem der vorhergehenden Ansprüche konfiguriert werden.

**Revendications**

1. Système acoustique (1) destiné à l'imagerie d'objet sous-marin, comprenant une antenne d'émetteur-récepteur sous-marine (11) de type électroacoustique, et des moyens de commande et de traitement (12) configurés pour mettre en œuvre une étape de détection (bloc 61) et une étape d'imagerie (bloc 62) ;
l'étape de détection (bloc 61) comportant :

• le fonctionnement de l'antenne d'émetteur-récepteur sous-marine (11) pour émettre des impulsions acoustiques isotropes et pour recevoir des signaux d'écho correspondants ;
• le calcul des puissances moyennes d'échantillons desdits signaux d'écho à l'aide d'une fenêtre glissante d'intégration des amplitudes au carré des échantillons desdits signaux d'écho ;
• la pondération des puissances moyennes calculées par une fonction exponentielle de compensation pour l'atténuation de divergence sphérique ; et
• la détection d'un objet sous-marin (5 ; 7) sur la base des puissances moyennes pondérées et d'un seuil de détection ;

l'étape d'imagerie (bloc 62) comportant la transmission, au moyen de l'antenne d'émetteur-récepteur sous-marine (11) et pour chaque angle azimutal inclus dans une plage prédéfinie d'angles azimutaux, d'une impulsion acoustique correspondante par :

• l'utilisation d'un faisceau en éventail pointé audit angle azimutal et présentant une largeur prédéfinie en azimut et une largeur prédéfinie en élévation, dans lequel ladite largeur prédéfinie en élévation est supérieure à ladite largeur prédéfinie en azimut ; et
• l'alimentation de l'antenne d'émetteur-récepteur sous-marine (11) avec des signaux d'excitation de manière à amener une recombinaison cohérente des signaux acoustiques correspondants transmis dans l'eau à une région de focalisation tridimensionnelle située à une distance de focalisation prédéfinie à partir de l'antenne d'émetteur-récepteur sous-marine (11), à laquelle distance de focalisation prédéfinie un objet sous-marin (5 ; 7) est localisé ;

dans lequel les impulsions acoustiques sont transmises en faisant varier le pointage azimutal du faisceau en éventail de manière à réaliser un balayage complet de la plage prédéfinie d'angles azimutaux ;
ladite étape d'imagerie (bloc 62) comportant en outre :

• pour chaque impulsion acoustique émise, la réception d'un signal d'écho correspondant au moyen de l'antenne d'émetteur-récepteur sous-marine (11) ;
• le traitement des signaux d'écho reçus en réalisant un procédé de formation de faisceaux de manière à calculer une carte numérique tridimensionnelle de puissances associées à une grille prédéfinie de points situés dans la région de focalisation tridimensionnelle ; les signaux d'écho reçus étant traités en formant des faisceaux en pinceau, dont chacun est pointé en un point correspondant de ladite grille prédéfinie ; et
• le traitement de la carte numérique tridimensionnelle des puissances en réalisant un procédé de détection des contours de manière à former une image de l'objet sous-marin (5 ; 7) ;

le système acoustique (1) étant **caractérisé en ce que** les moyens de traitement (12) sont configurés pour :

• calculer une distance, à partir de l'antenne d'émetteur-récepteur sous-marine (11), d'un objet sous-marin (6) détecté dans l'étape de détection (61) ; et pour
• mettre en œuvre l'étape d'imagerie (bloc 62) à l'aide de ladite distance calculée comme distance de focalisation prédéfinie.

2. Système acoustique selon la revendication 1, dans lequel les moyens de commande et de traitement (12) sont configurés pour mettre en œuvre l'étape d'imagerie (bloc 62) en alimentant l'antenne d'émetteur-récepteur sous-marine (11) avec des signaux d'excitation à onde carrée présentant des retards prédéfinis de manière à amener une recombinaison cohérente des signaux acoustiques correspondants transmis dans l'eau au niveau de la région de focalisation tridimensionnelle.

3. Système acoustique selon la revendication 1 ou 2, dans lequel les moyens de commande et de traitement (12) sont configurés pour mettre en œuvre l'étape de détection (bloc 61) en alimentant l'antenne d'émetteur-récepteur sous-marine (11) avec des signaux d'excitation à onde carrée.

4. Système acoustique selon l'une quelconque des revendications 1 à 3, dans lequel l'antenne d'émetteur-récepteur sous-marine (11) comprend des transducteurs électroacoustiques actifs et des transducteurs électroacoustiques passifs ; et dans lequel les moyens de commande et de traitement (12) sont configurés pour mettre en œuvre l'étape de détection (bloc 61) en actionnant :

- en émission, des transducteurs électroacoustiques actifs agencés dans une région centrale de ladite antenne d'émetteur-récepteur sous-marine (11) ; et
- en réception, des transducteurs électroacoustiques passifs agencés dans ladite région centrale de l'antenne d'émetteur-récepteur sous-marine (11).

5. Système acoustique selon une quelconque revendication précédente, dans lequel l'antenne d'émetteur-récepteur sous-marine (11) comprend :

- une antenne d'émission qui comporte deux réseaux de transducteurs électroacoustiques actifs (S1, S2) reposant sur un seul et même plan ; et
- une antenne de réception qui comporte cinq réseaux de transducteurs électroacoustiques passifs (R1, R3, R3, R4, R5) reposant sur ledit plan ; dans lequel :

- un premier réseau de transducteurs électroacoustiques passifs (R1) s'étend principalement le long d'une première direction rectiligne (d1) reposant sur ledit plan ;
- les deux réseaux de transducteurs électroacoustiques actifs (S1, S2) s'étendent principalement le long d'une deuxième direction rectiligne (d2) qui repose sur ledit plan, est perpendiculaire à la première direction rectiligne (d1) et coupe ladite première direction rectiligne (d1) en un point (111) identifiant un centre de phase de l'antenne d'émetteur-récepteur sous-marine (11) ;
- les deux réseaux de transducteurs électroacoustiques actifs (S1, S2) s'étendent le long de la deuxième direction rectiligne (d2), chacun sur un côté respectif par rapport au centre de phase (111) ;
- le premier réseau de transducteurs électroacoustiques passifs (R1) s'étend à travers le centre de phase (111) et des deux côtés par rapport audit centre de phase (111) le long de la première direction rectiligne (d1) ;
- un deuxième et un troisième réseaux de transducteurs électroacoustiques passifs (R2, R3) s'étendent principalement le long d'une troisième direction rectiligne (d3) qui repose sur ledit plan, passe à travers le centre de phase (111) et est inclinée de 45° par rapport à la fois à la première direction rectiligne (d1) et à la deuxième direction rectiligne (d2) ;
- le deuxième et le troisième réseaux de transducteurs électroacoustiques passifs (R2, R3) s'étendent le long de la troisième direction rectiligne (d3), chacun sur un côté respectif par rapport au centre de phase (111) ;
- un quatrième et un cinquième réseaux de transducteurs électroacoustiques passifs (R4, R5) s'étendent principalement le long d'une quatrième direction rectiligne (d4) qui repose sur ledit plan, passe par le centre de phase (111) et est inclinée de 45° par rapport à la fois à la première direction rectiligne (d1) et à la deuxième direction rectiligne (d2) et de 90° par rapport à la troisième direction rectiligne (d3) ; et
- le quatrième et le cinquième réseaux de transducteurs électroacoustiques passifs (R4, R5) s'étendent le long de la quatrième direction rectiligne (d4), chacun sur un côté respectif par rapport au centre de phase (111).

6. Système acoustique selon la revendication 5, dans lequel chacun des deux réseaux de transducteurs électroacoustiques actifs (S1, S2) comporte des transducteurs électroacoustiques actifs respectifs espacés les uns des autres selon une première loi d'espacement ; et dans lequel chacun des cinq réseaux de transducteurs électroacoustiques passifs (R1, R2, R3, R4, R5) comporte des transducteurs électroacoustiques passifs respectifs espacés les uns des autres selon une seconde loi d'espacement.

7. Système acoustique selon la revendication 6, dans lequel :

• dans chacun des deux réseaux de transducteurs électroacoustiques actifs (S1, S2), l'espacement entre les barycentres des transducteurs électroacoustiques actifs adjacents augmente avec la distance croissante au centre de phase (111) selon une première loi non linéaire ; et
• dans chacun des cinq réseaux de transducteurs électroacoustiques passifs (R1, R2, R3, R4, R5), l'espacement entre les barycentres des transducteurs électroacoustiques passifs adjacents augmente avec la distance croissante au centre de phase (111) selon une seconde loi non linéaire.

8. Produit-programme informatique comprenant des parties de code logiciel qui sont :

• exécutables par des moyens de traitement électroniques d'un système acoustique sous-marin comprenant une antenne d'émetteur-récepteur sous-marine (11) de type électroacoustique ; et
• de manière à amener, lorsqu'ils sont exécutés, lesdits moyens de traitement électroniques à devenir configurés comme moyens de commande et de traitement (12) du système acoustique (1) selon une quelconque revendication précédente.

FIG. 1

FIG. 2

FIG. 3

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2299292 A1

- US 5200931 A